# EUROPÄISCHE PATENTSCHRIFT

(11) **EP 1 351 364 B1**
(45) Veröffentlichungstag und Bekanntmachung des Hinweises auf die Patenterteilung: **23.11.2005**
(21) Anmeldenummer: 03006034.7
(22) Anmeldetag: 19.03.2003
(51) Int. Cl.: H02J 7/00, G01R 31/36

(54) **Akkuladegerät**
Battery charging device
Chargeur de batterie

(30) Priorität: 03.04.2002 DE 20205135 U
(43) Veröffentlichungstag der Anmeldung: 08.10.2003
(73) Patentinhaber: FRIWO Gerätebau GmbH, 48346 Ostbevern (DE)
(72) Erfinder: Wegner, Armin Fritz, 59269 Beckum (DE)
(74) Vertreter: DR. STARK & PARTNER

(56) Entgegenhaltungen:
- DE-A- 3 530 148
- DE-U- 8 408 361
- GB-A- 2 124 839
- GB-A- 2 368 203
- US-A- 4 360 780
- US-A1- 2002 117 995

## Beschreibung

Die Erfindung betrifft ein Akkuladegerät, mit einem Netzstromanschluss, einer Ladeelektronik und zumindest einer als Halterung für wenigstens einen Akku in einem Gehäuse vorgesehenen Ladeschale, die an der Ladeelektronik angeschlossene und einen Stauraum für den Akku zwischen sich freilassende Akkukontaktelemente aufweist, wobei wenigstens ein Akkukontaktelement zur Bewirkung einer den eingesetzten Akku zwischen den Akkukontaktelementen klemmend fixierenden Haltekraft gegen eine Rückstellkraft in eine den Stauraum vergrößernde Richtung verlagerbar ausgebildet ist.

Aus der Praxis sind derartige Akkuladegeräte bekannt, die zumeist sowohl zum Aufladen von handelsüblichen Akkus als auch zum Entladen und/oder gegebenenfalls zur Überprüfung des Ladezustandes eines Akkus geeignet sind. Unter Akkus bzw. Akkumulatoren werden dabei wiederaufladbare Speicherelelmente für elektrische Energie verstanden, die eine längliche, insbesondere zylindrische Form mit an den entgegengesetzten Stirnseiten angeordneten Akkukontakten aufweisen. Die gängigsten Größen solcher Akkus werden in Deutschland mit Mikrozelle, Mignonzelle, Babyzelle und Monozelle bezeichnet.

Bei üblichen Akkuladegeräten ist das Gehäuse oberseitig geöffnet und kann gegebenenfalls, z. B. als Staubschutz mittels eines Deckels verschlossen werden. In dem Gehäuse sind Ladeschalen angeordnet, die zwei einen Stauraum für den Akku zwischen sich freilassende Akkukontaktelemente aufweisen, wobei ein Akkukontaktelement feststehend angeordnet ist und das andere Akkukontaktelement zur Bewirkung einer den eingesetzten Akku klemmend fixierenden Haltekraft gegen eine Rückstellkraft in eine den Stauraum vergrößernde Richtung verlagerbar ausgebildet ist. Hierbei kann das verlagerbare Akkukontaktelement insbesondere als Spiralfeder ausgebildet sein.

Nachteilig hierbei ist, dass das Gehäuse des Akkuladegerätes durch die vollständig innenliegenden Ladeschalen recht groß dimensioniert sein muss und innenseitig verstauben und verschmutzen kann, sofern kein Deckel vorgesehen ist. Falls ein Deckel vorgesehen ist, kommt es bei geschlossenem Deckel zu einem Hitzestau während des Ladevorgangs oder aber der Deckel muss während des Ladevorgangs in geöffnetem Zustand verbleiben, wodurch er einerseits einen nochmals gesteigerten Platzbedarf verursacht und andererseits einer Beschädigungsgefahr ausgesetzt ist.

Aufgabe der Erfindung ist es, die vorgenannten Nachteile zu vermeiden und ein Akkuladegerät der vorgenannten Art anzugeben, mit dem problemlos Akkuladevorgänge ohne die Gefahr eines Hitzestaus möglich sind und das andererseits in unbenutztem Zustand einen sehr geringen Platzbedarf aufweist.

Diese Aufgabe wird gelöst durch ein Akkuladegerät, mit einem Netzstromanschluss, einer Ladeelektronik und zumindest einer als Halterung für wenigstens einen Akku in einem Gehäuse vorgesehenen Ladeschale, die an der Ladeelektronik angeschlossene und einen Stauraum für den Akku zwischen sich freilassende Akkukontaktelemente aufweist, wobei wenigstens ein Akkukontaktelement zur Bewirkung einer den eingesetzten Akku zwischen den Akkukontaktelementen klemmend fixierenden Haltekraft gegen eine Rückstellkraft in eine den Stauraum vergrößernde Richtung verlagerbar ausgebildet ist, und bei dem ferner
- wenigstens eine Ladeschale für die Bestückung mit einem Akku und den Akku-Ladevorgang mit einem zumindest ein Akkukontaktelement und den Stauraum umfassenden Teilbereich aus dem Gehäuse, translatorisch und/oder rotatorisch bis zu einem Anschlag oder dergleichen herausbewegbar angeordnet ist,
- das innere und nach außen weisende Akkukontaktelelement feststehend ausgebildet ist und der herausbewegbare Teilbereich der Ladeschale ein insbesondere stabförmiges Verbindungselement mit dem daran angeordneten äußeren und einwärts gerichteten Akkukontaktelement umfasst, und
- der herausbewegbare Teilbereich der Ladeschale endseitig eine die Akkukontaktelemente bei nicht aus dem Gehäuse herausbewegter Ladeschale abdeckende und das Akkuladegerät verschließende, insbesondere in eine passende Vertiefung in dem Gehäuse wenigstens teilweise eingreifende Abschlussplatte aufweist.

Hierdurch kann die für den Ladevorgang eines Akkus benötigte Ladeschale aus dem Gehäuse herausbewegt und mit dem zu ladenden Akku bestückt werden. Die eventuell vorhandenen weiteren Ladeschalen können in ihrer im Gehäuse befindlichen Ursprungsposition verbleiben und sind somit gegen Verschmutzung und Verstauben geschützt.

Da das innere und nach außen weisende Akkukontaktelelement feststehend ausgebildet ist und der herausbewegbare Teilbereich der Ladeschale ein insbesondere stabförmiges Verbindungselement mit dem daran angeordneten äußeren und einwärts gerichteten Akkukontaktelement umfasst, ist die Ladeschale lediglich in herausbewegtem, insbesondere herausgezogenem bzw. herausgeschwenktem Zustand mit einem dem zu ladenden Akku entsprechenden Stauraum zwischen den Akkukontaktelelmenten versehen. Dabei können die beiden Akkukontaktelemente in nicht herausbewegtem Zustand der Ladeschale in einen geringen Freiraum zur Vermeidung von Kurzschlüssen zwischen sich freilassender Weise voreinander angeordnet sein, wobei das Verbindungselement sich bis hinter das innere Akkukontaktelement in das Gehäuse erstreckt.

Da der herausbewegbare Teilbereich der Ladeschale endseitig eine die Akkukontaktelemente bei nicht aus dem Gehäuse herausbewegter Ladeschale abdeckende und das Akkuladegerät verschließende, insbesondere in eine passende Vertiefung in dem Gehäuse wenigstens teilweise eingreifende Abschlussplatte aufweist, sind die Akkukontaktelemente vor Beschädigungen geschützt und in das Gehäuse des Akkuladegerätes kann kein Staub und/oder Schmutz eindringen.

Vorzugsweise kann bei wenigstens einer Ladeschale im Bereich der Akkukontaktelemente jeweils ein für verschiedene Akkugrößen geeignete Abstufungen aufweisender und sich insbesondere nach oben erweiternder, in etwa V-förmig ausgebildeter Haltebereich vorgesehen sein, so dass Akkus unterschiedlicher Formate zwangsläufig in einer zu den Akkukontaktelmenten entsprechend ausgerichten Position gehalten werden und Fehlbenutzungen von vornherein ausgeschlossen sind.

Dabei können die Akkukontaktelemente insbesondere mehrere, den jeweiligen Akkuformaten entsprechende und übereinander angeordnete elektrisch leitende Vorsprünge für den tatsächlichen Akkukontakt aufweisen, die vorzugsweise jeweils separat mit der Ladeelektronik verbunden sein können, so dass aufgrund des wegen der Haltebereiche zwangsläufig richtig geschlossenen Stromkreises das zu ladende Akkuformat automatisch detektiert werden kann und die Steuerung des Ladevorgangs auf die technischen Daten dieses Akkuformates abstimmbar ist.

Dabei kann an wenigstens die Abschlussplatte einer Ladeschale angrenzend eine vertiefte, insbesondere muldenförmige Aussparung in dem Gehäuse angeordnet sein und der Rand dieser Abschlussplatte gegenüber der Aussparung zumindest leicht vorspringend ausgebildet sein, so dass die Abschlussplatte zum Herausbewegen der Ladeschale aus dem Gehäuse leicht gegriffen werden kann und separat angebrachte vorspringende Bereiche oder dergleichen zum Öffnen nicht erforderlich sind.

Im Folgenden wird ein in der Zeichnung dargestelltes Ausführungsbeispiel der Erfindung erläutert. Es zeigen:
- Fig. 1: ein erfindungsgemäßes Akkuladegerät mit aus dem Gehäuse herausbewegten Ladeschalen,
- Fig. 2: den Gegenstand nach Fig. 1 mit zwei eingeschobenen und zwei jeweils mit einem Akku bestückten herausbewegten Ladeschalen und
- Fig. 3: den Gegenstand nach Fig. 1 mit vollständig eingeschobenen Ladeschalen.

In allen Figuren werden für gleiche bzw. gleichartige Bauteile übereinstimmende Bezugszeichen verwendet.

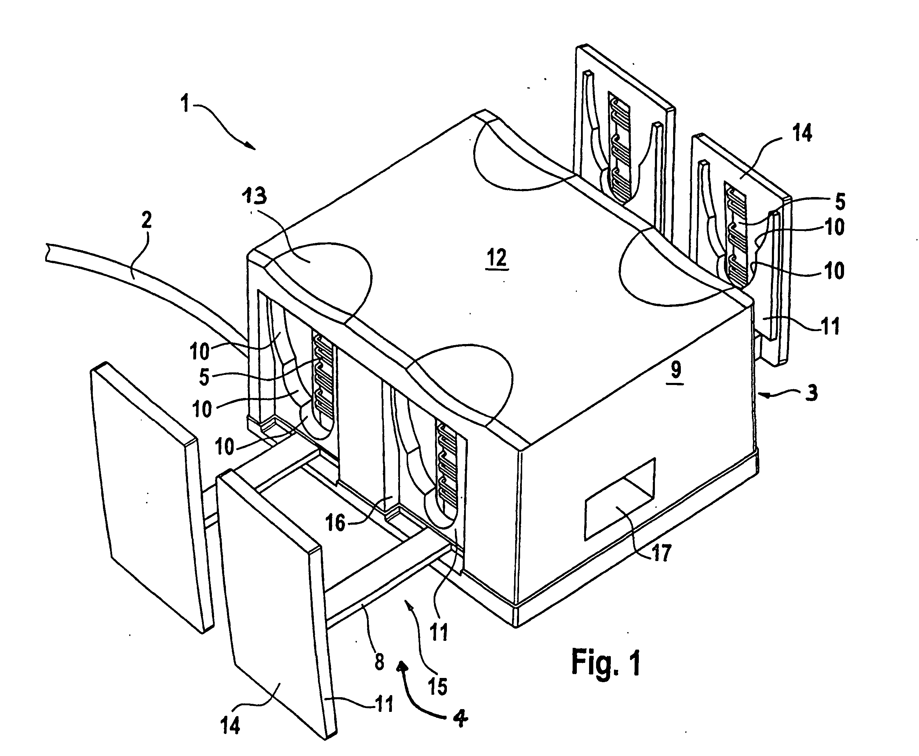

Fig. 1 zeigt ein Akkuladegerät 1 mit einem Netzstromanschluss 2 und einem Gehäuse 3 mit Ladeschalen 4. Die Ladeschalen 4 bestehen dabei jeweils aus zwei Akkukontaktelementen 5, die zwischen sich einen Stauraum 6 für den zu ladenden Akku 7 freilassen.

Dabei sind die Ladeschalen 4 derart aufgebaut, dass das äußere Akkukontaktelement 5 an einem unterseitig vorgesehenen stabförmigen Verbindungselement 8 angebracht ist und das Verbindungselement 8 in das Gehäuse 3 einschiebbar ist, wohingegen das innere Akkukontaktelement 5 feststehend leicht versenkt an der entsprechenden Wand 9 des Gehäuses 3 angeordnet ist.

Im Bereich der Akkukontaktelemente 5 ist dabei jeweils ein für verschiedene Akkugrößen geeignete Abstufungen 10 aufweisender, sich V-förmig nach oben erweiternder Haltebereich 11 vorgesehen, in dessen Abstufungen 10 der zu ladende Akku 7 eingelegt werden kann.

Dabei können die Akkukontaktelemente 5 zur Erzielung einer den Akku 7 fixierenden Haltekraft federnd ausgebildet sein und/oder es kann das Verbindungselement 8 gegen die Rückstellkraft einer Feder oder dergleichen aus dem Gehäuse 3 herausziehbar sein.

Die Oberseite 12 des Gehäuses weist muldenförmig vertiefte Aussparungen 13 auf, die mit außenseitig an den äußeren Akkukontaktelementen 5 angebrachten Abschlussplatten 14 korrespondierend ausgebildet sind, so dass ein leichtes Herausziehen des durch äußeres Akkukontaktelement 5 und Verbindungselement 8 gebildeten Teilbereichs 15 der Ladeschale 4 möglich ist.

Der Haltebereich 11 kann dabei in eine entsprechende Vertiefung 16 im Bereich des inneren Akkukontaktelementes 5 eingreifen, wenn die Ladeschale 4 nicht aus dem Gehäuse 3 herausbewegt ist.

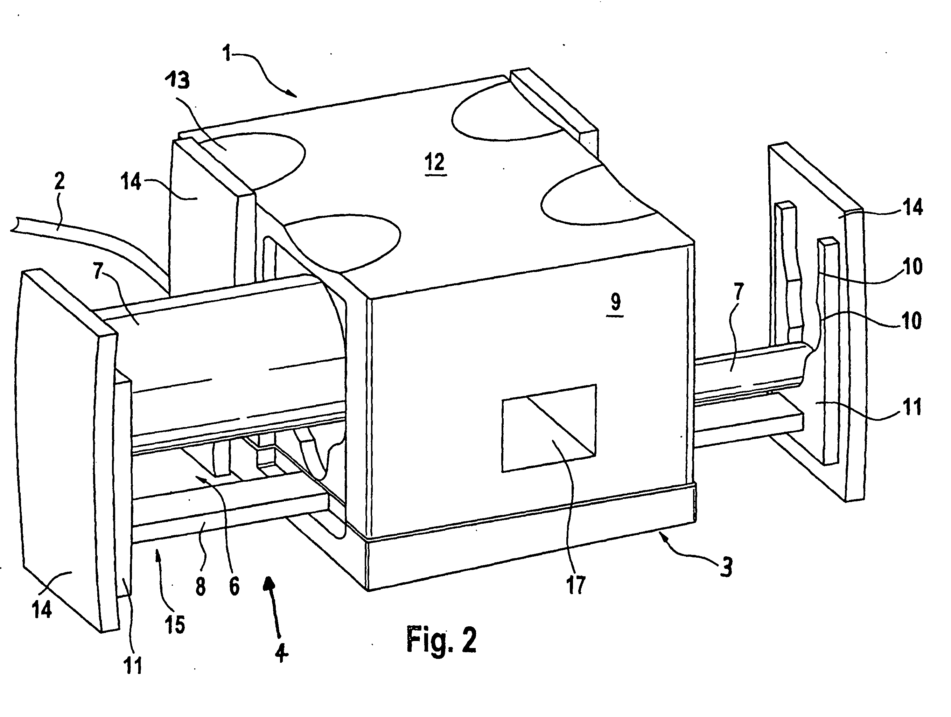

Fig. 2 zeigt ein Akkuladegerät 1 mit zwei herausgezogenen Teilbereichen 15 der Ladeschalen 4, bei denen Akkus 7 verschiedener Akkuformate für den Ladevorgang eingesetzt sind. In einer Wand 9 des Gehäuses 3 ist in einer Ausnehmung 17 weiterhin eine Lademöglichkeit für einen Akku im 9-Volt-Blockformat vorgesehen.

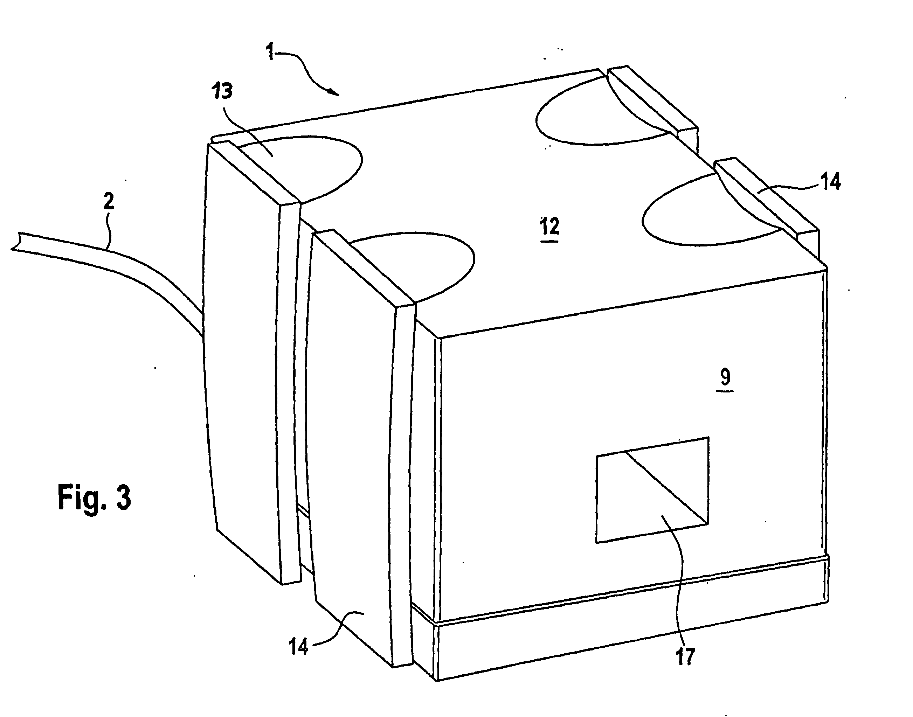

Fig. 3 zeigt ein erfindungsgemäßes Akkuladegerät mit nicht herausbewegten Ladeschalen 4, wobei die Abschlussplatten 14 die entsprechenden Akkukontaktelemente 5 und die Haltebereiche 11 verschließen und somit vor Verschmutzung und/oder Beschädigung schützen.

Vorzugsweise können die jeweils gegenüberliegenden Ladeschalen 4 seitlich und/oder in der Höhe etwas versetzt angeordnet sein, so dass die Gerätegröße des Akkuladegerätes 1 im Wesentlichen durch die Länge des Verbindungselementes 8 bestimmt wird und insofern das Akkuladegerät sehr gering dimensioniert werden kann.

## Patentansprüche

1. Akkuladegerät (1), mit einem Netzstromanschluss (2), einer Ladeelektronik und zumindest einer als Halterung für wenigstens einen Akku (7) in einem Gehäuse (3) vorgesehenen Ladeschale (4), die an der Ladeelektronik angeschlossene und einen Stauraum (6) für den Akku (7) zwischen sich freilassende Akkukontaktelemente (5) aufweist, wobei wenigstens ein Akkukontaktelement (5) zur Bewirkung einer den eingesetzten Akku (7) zwischen den Akkukontaktelementen (5) klemmend fixierenden Haltekraft gegen eine Rückstellkraft in eine den Stauraum (6) vergrößernde Richtung verlagerbar ausgebildet ist **dadurch gekennzeichnet,**
- **dass** wenigstens eine Ladeschale (4) für die Bestückung mit einem Akku (7) und den Akku-Ladevorgang mit einem zumindest ein Akkukontaktelement (5) und den Stauraum (6) umfassenden Teilbereich (15) aus dem Gehäuse (3), translatorisch und/oder rotatorisch bis zu einem Anschlag oder dergleichen herausbewegbar angeordnet ist,
- dass das innere und nach außen weisende Akkukontaktelelement (5) feststehend ausgebildet ist und der herausbewegbare Teilbereich (15) der Ladeschale (4) ein insbesondere stabförmiges Verbindungselement (8) mit dem daran angeordneten äußeren und einwärts gerichteten Akkukontaktelement (5) umfasst, und
- **dass** der herausbewegbare Teilbereich (15) der Ladeschale (4) endseitig eine die Akkukontaktelemente (5) bei nicht aus dem Gehäuse (3) herausbewegter Ladeschale (4) abdeckende und das Akkuladegerät (1) verschließende, insbesondere in eine passende Vertiefung (16) in dem Gehäuse (3) wenigstens teilweise eingreifende Abschlussplatte (14) aufweist.

2. Akkuladegerät (1) nach Anspruch 1, **dadurch gekennzeichnet, dass** bei wenigstens einer Ladeschale (4) im Bereich der Akkukontaktelemente (5) jeweils ein für verschiedene Akkugrößen geeignete Abstufungen (10) aufweisender und sich insbesondere nach oben erweiternder, in etwa V-förmig ausgebildeter Haltebereich (11) vorgesehen ist.

3. Akkuladegerät (1) nach Anspruch 1 oder 2, **dadurch gekennzeichnet, dass** an wenigstens die Abschlussplatte (14) einer Ladeschale (4) angrenzend eine vertiefte, insbesondere muldenförmige Aussparung (13) in dem Gehäuse (3) angeordnet ist und der Rand dieser Abschlussplatte (14) gegenüber der Aussparung (13) zumindest leicht vorspringend ausgebildet ist.

## Claims

1. Battery charging apparatus (1), having a mains current connection (2), an electronic charging device and at least one charging tray (4), which is provided as a holder for at least one battery (7) in a housing (3) and has battery contact elements (5) which are connected to the electronic charging device and define a storage chamber (6) for the battery (7) therebetween, at least one battery contact element (5) being adapted to be displaceable into a direction which enlarges the storage chamber (6) to produce a retaining force, which clampingly secures the inserted battery (7) between the battery contact elements (5), in opposition to a restoring force, **characterised**
- **in that** at least one charging tray (4), which is to be provided with a battery (7) and is for the battery charging process, is disposed so as to be displaceable from the housing (3), more especially in a translatory manner and/or in a rotatory manner as far as a stop member of the like, with a partial region (15) which includes at least one battery contact element (5) and the storage chamber (6),
- **in that** the internal and outwardly pointing battery contact element (5) is stationary, and the outwardly displaceable partial region (15) of the charging tray (4) includes a, more especially bar-shaped, connecting element (8) with the external and inwardly orientated battery contact element (5) disposed on said connecting element, and
- **in that** the outwardly displaceable partial region (15) of the charging tray (4) has, terminally, an end plate (14), which covers the battery contact elements (5) when the charging tray (4) has not been displaced from the housing (3), and closes the battery charging apparatus (1), said end plate more especially at least partially engaging in an appropriate indentation (16) in the housing (3).

2. Battery charging apparatus (1) according to claim 1, **characterised in that**, when there is at least one charging tray (4) in the region of the battery contact elements (5), a substantially V-shaped retaining region (11) is respectively provided which has stepped portions (10) suitable for different battery sizes and more especially widens upwardly.

3. Battery charging apparatus (1) according to claim 1 or 2, **characterised in that**, adjacent at least the end plate (14) of a charging tray (4), a sunken, more especially trough-shaped recess (13) is disposed in the housing (3), and the edge of this end plate (14) is configured to protrude at least slightly from the recess (13).

## Revendications

1. Chargeur de batterie (1) comprenant un raccordement au secteur (2), un système électronique de chargement et au moins une coupelle de chargement (4) prévue dans un boîtier (3) en tant que support pour au moins une batterie (7), qui présente des éléments de contact (5) reliés au système électronique de chargement et ménageant entre eux un espace de rangement (6) pour la batterie (7), sachant qu'au moins un élément de contact (5) pour la batterie est réalisé mobile dans un sens pour agrandir l'espace de rangement (6) contre une force de rappel, afin de provoquer une force de serrage immobilisant la batterie (7) mise en place entre les éléments de contact (5) pour la batterie,
**caractérisé en ce que**
- une partie (15) d'au moins une coupelle de chargement (4) comprenant au moins un élément de contact (5) pour la batterie et l'espace de rangement (6) est disposée de manière à pouvoir être extraite du boîtier (3), notamment par un mouvement de translation et/ou de rotation, jusqu'à une butée ou analogue, afin de placer une batterie (7) dans ladite coupelle de chargement et de procéder au chargement de la batterie,
- l'élément de contact (5) intérieur et pointant vers l'extérieur est réalisé fixe et la partie extractible (15) de la coupelle de chargement (4) comprend un élément de liaison (8) notamment en forme de baguette portant l'élément de contact (5) extérieur et rentrant, et
- la partie extractible (15) de la coupelle de chargement (4) présente à son extrémité une plaquette d'extrémité (14) qui, lorsque ladite coupelle de chargement (4) n'est pas extraite du boîtier (3), recouvre les éléments de contact (5) pour la batterie et ferme le chargeur de batterie (1), notamment s'encastre au moins en partie dans un renfoncement complémentaire (16) dans le boîtier (3).

2. Chargeur de batterie (1) selon la revendication 1, **caractérisé en ce qu'**une zone d'immobilisation (11) réalisée approximativement en forme de V, qui s'élargit notamment vers le haut et qui présente des gradins (10) pour s'adapter à différentes tailles de piles, est prévue dans la zone des éléments de contact (5) pour la batterie d'au moins une coupelle de chargement (4).

3. Chargeur de batterie (1) selon la revendication 1 ou 2, **caractérisé en ce qu'**un évidement (13) profond, notamment en forme d'auge, est ménagé dans le boîtier (3) de façon au moins adjacente à la plaque d'extrémité (14) d'une coupelle de chargement (4), et **en ce que** le bord de ladite plaque d'extrémité (14) est réalisé de manière au moins légèrement saillante par rapport à l'évidement (13).
